# EUROPÄISCHE PATENTSCHRIFT

(11) **EP 0 288 761 B1**
(45) Veröffentlichungstag und Bekanntmachung des Hinweises auf die Patenterteilung: **18.11.1993**
(21) Anmeldenummer: 88105027.2
(22) Anmeldetag: 29.03.1988
(51) Int. Cl.: C08F 2/38, C08F 4/00, C08F 297/04

(54) **Verfahren zur Herstellung multifunktioneller Initiatoren für die anionische Polymerisation, oligomere multifunktionelle Initiatoren, Verwendung der erhaltenen Polymeren zur Herstellung gegebenenfalls funktionalisierter Polymere und als Prepolymere für andere Harze**
Process for the manufacture of multifunctional initiators for anionic polymerization, oligomeric multifunctional initiators, use of these polymers in the manufacture of functionalised polymers and as prepolymers for other resins
Procédé de préparation d'initiateurs multifonctionnels pour la polymérisation anionique, initiateurs oligomères multifonctionnels, application des polymères obtenus à la préparation de polymères fonctionnalisés et comme prépolymères pour d'autres résines

(30) Priorität: 08.04.1987 DE 3711920
(43) Veröffentlichungstag der Anmeldung: 02.11.1988
(73) Patentinhaber: BASF Aktiengesellschaft, 67063 Ludwigshafen (DE)
(72) Erfinder: Bronstert, Klaus, Dr., D-6719 Carlsberg (DE); Bohnet, Siegbert, Dr., D-6800 Mannheim 24 (DE)

(56) Entgegenhaltungen:
- GB-A- 2 124 228
- US-A- 4 182 818

## Beschreibung

Die Erfindung betrifft multifunktionelle oligomere Initiatoren für die anionische Polymerisation, ihre Herstellung sowie die Verwendung zur Herstellung gegebenenfalls funktionalisierter Polymerer und/oder Blockcopolymerer aus Alkenylaromaten und Dienen, ferner die Verwendung solcher Polymerer als Präpolymere für Polyurethane, Epoxidharze und andere Harze.

Es ist bekannt, durch Umsetzung von metallorganischen Lithiumverbindungen mit diethylenisch ungesättigten aromatischen Verbindungen, z.B. Divinylbenzol oder Diisopropenylbenzol,mehrfunktionelle metallorganische Initiatoren für die anionische Polymerisation von Vinylverbindungen oder Dienen herzustellen. In der DE-A 3 222 328 werden solche Initiatoren beschrieben. Für ihre Herstellung ist es jedoch erforderlich, in Gegenwart einer, bezogen auf die lithiumorganische Verbindung, mehrfachen molaren Menge an tertiären Aminen zu arbeiten, um eine ausreichende Stabilität der polyfunktionellen Initiatoren zu gewährleisten und die Bildung unlöslicher vernetzter Anteile zu verhindern.

In der Zeitschrift Plaste + Kutschuk, 26, (1979), Seiten 263 bis 264 wird in ähnlicher Form die Herstellung eines Initiators auf der Basis von Divinylbenzol mit der Funktionalität von 2,4 beschrieben, wobei auch hier in Gegenwart von tertiären Aminen gearbeitet wird. Polymerisiert man mit solchen in Gegenwart von polaren Verbindungen bzw. Lösungsmitteln hergestellten mehrfunktionellen Initiatoren Diene, so wird die Struktur der Polymerisate in der Weise verändert, daß die Monomeren vorwiegend in 1,2- bzw. 3,4-Position eingebaut werden und nicht, wie für viele Zwecke erwünscht, vorwiegend in 1,4-cis- oder 1,4-trans-Konfiguration.

Obgleich es Veröffentlichungen gibt (z.B. C.A.H. Acad. Sci., Ser. C., 283, (1976), Seiten 123 bis 125), nach denen das Arbeiten in Gegenwart von polaren Verbindungen nicht erforderlich ist, so zeigt die Überprüfung, daß mit solchen Initiatoren vorwiegend Polymere gebildet werden, die monofunktionell gewachsen sind. So zeigen z.B. mit solchen Katalysatoren durch aufeinanderfolgende Polymerisation von Butadien und Styrol hergestellte Polymere nicht die Eigenschaften von Elastomeren, wie sie für die erwarteten 3-Blockcopolymeren typisch wären , sondern eine für 2-Blockcopolymere charakteristische Plastizität.

Aufgabe der vorliegenden Erfindung war es, diese Nachteile zu vermeiden und polyfunktionelle Initiatoren für die anionische Polymerisation vorzugsweise in Abwesenheit von polaren Verbindungen zur Verfügung zu stellen, hierfür ein Herstellungsverfahren zu entwickeln und mit diesen Initiatoren gegebenenfalls funktionalisierte Polymere und/oder Blockcopolymere aus Alkenylaromaten und/oder Dienen herzustellen.

Eine weitere Aufgabe war die Verwendung erfindungsgemäßer funktionalisierter Polymerer als Präpolymere in Polyurethanen, Epoxidharzen und anderen Harzen.

Die Aufgabe wurde dadurch gelöst, daß man eine Mischung von Dialkenylaromaten und Alkenylaromaten, vorzugsweise gelöst in inertem Lösungsmittel, im Molverhältnis 1:4 bis 1:100 in einem Zeitraum von 3 bis 300 Minuten bei Temperaturen zwischen 25 und 100°C kontinuierlich oder in kleinen Portionen -quasi kontinuierlich -unter guter Durchmischung in eine Vorlage laufen läßt, die, bezogen auf die Divinylaromaten, 1,2 bis 3,0 Moläquivalente einer oder mehrerer lithiumorganischer Verbindungen in Mischung mit einem inerten Lösungsmittel enthält, und auspolymerisieren läßt.

Bevorzugt werden als Dialkenylaromaten solche verwendet, die im Molekül zwei Vinylidengruppen enthalten, die in 1-Stellung mindestens eine Phenylengruppe oder deren Derivate und in 1ʹ-Stellung entweder durch H-oder eine Alkylgruppe oder eine weitere Phenylgruppe oder deren Derivate substituiert sind.

Besonders bevorzugt werden als Dialkenylaromaten m- oder p-Divinylbenzol bzw. deren Mischung miteinander und mit Vinylaromaten, wie sie bei der technischen Herstellung anfallen, und/oder m- oder p-Diisopropenylbenzol oder deren im Kern alkylierte Derivate, und/oder in 1', 1''-Stellung mit Phenylgruppen oder deren kernalkylierten Derivaten substituierte m- oder p-Divinylbenzole oder deren Mischung verwendet.

Die Dialkenylaromaten werden bevorzugt gemischt mit Styrol oder dessen im Kern durch Alkylgruppen substituierten Derivaten.

Bevorzugt als lithiumorganische Verbindungen sind Alkyllithiumverbindungen, insbesondere n-Butyl-Li, sec-Butyl-Li oder/und Methyllithium. Weniger bevorzugt werden deren Anlagerungsprodukte an 1 bis 20 Mol Styrol und/oder Kernalkylstyrol und/oder Butadien, Isopren oder 2,3-Dimethylbutadien verwendet.

Bevorzugt sind auch Verfahren zur Herstellung gegebenenfalls funktionalisierter Polymerer mit Molgewichten zwischen 2 000 und 200 000, bei denen man Alkenylaromaten und/oder Diene und/oder andere ionisch polymerisierbare Monomere gemeinsam oder nacheinander mit den multifunktionellen Initiatoren gemäß Anspruch 1 anionisch polymerisiert und gegebenenfalls anschließend mit geeigneten Reagentien funktionalisiert. Als zu polymerisierende alkenylaromatische Monomere werden insbesondere Styrol oder im Kern und/oder in α-Stellung alkylierte Styrole und/oder als Diene Butadien oder Isopren und/oder als andere ionisch polymerisierbare Monomere Methacrylsäureester oder Methacrylnitril verwendet. Die Polymeren können nach Beendigung der Polymerisation durch übliche Umsetzung mit Alkylenoxiden oder Alkylensulfiden funktionalisiert werden. Die Polymeren können auch zur Einführung aminischer Endgruppen nach Beendigung der Polymerisation mit Reagentien aus den Klassen 1,3-Diaza-(3,1,0)hexane oder der Aldimine umgesetzt werden.

Erfindungsgemäß entsteht ein oligomerer Initiator, mit dem es gelingt, durch Zugabe von Monomeren wie Styrol und seinen Derivaten und/oder Dienen bifunktionell wachsende lebende Polymere zu erzeugen. Polymerisiert man zunächst Diene und dann Styrol, so entstehen 3-Blockcopolymerisate mit den typischen Eigenschaften von Elastomeren. Im Anschluß an die Polymerisation können diese Polymeren mit geeigneten Reagentien funktionalisiert werden. Mit Schiffbasen oder Diaziridinen entstehen z.B. mit Amingruppen terminierte Polymere, die sich mit Diisocyanaten vernetzen lassen. Bei Terminierung mit Oxiranen oder Thiranen entstehen analog mit OH- oder SH-Gruppen entständig funktionalisierte Polymere.

Die erfindungsgemäßen oligomeren bifunktionellen Initiatoren werden nur erhalten, wenn man die Dialkenylaromaten zusammen bzw. gleichzeitig, zweckmäßig als Mischung mit einem mehrfachen Überschuß an Monoalkenylaromaten im Verlaufe von mindestens 3 Minuten unter intensivem Rühren in die Vorlage mit den lithiumorganischen Verbindungen hineinlaufen läßt. Verwendet man weniger als 2 Mol Zusatz von Mono-Alkenylaromat, so entsteht kein oder fast kein bifunktioneller Initiator. Die besten Ergebnisse werden erzielt, wenn man einen 4- bis 50-fachen molaren Überschuß an monoalkenylaromatischen Verbindungen verwendet. Mehr als einen 100fachen molaren Überschuß zu verwenden ist normalerweise nicht sinnvoll, weil der entstehende oligomere Initiator ein hohes Molekulargewicht erreicht, und keine weitere Verbesserung der Polyfunktionalität festgestellt werden kann.

Als Dialkenylaromaten eignen sich besonders gut m- und p-Divinylbenzol oder deren Mischung, sowie die käuflich erhältlichen technischen Gemische, die z.B. 40 bis 60 Gew.% m- und p-Divinylbenzol neben verschiedenen Vinyläthylbenzolen und inerten Nebenprodukten enthalten. Geeignet sind auch die verschiedenen isomeren Diisopropenylbenzole oder 1,3-Bis(1-phenylvinyl)benzol oder dessen kernalkylierte Derivate, sowie Mischungen aller dieser Dialkenylaromaten.

Als Monoalkenylaromaten sind vorzugsweise geeignet Monostyrol sowie dessen im Kern alkylierte Derivate. Weniger geeignet ist α-Methylstyrol, ungeeignet sind Diene. Obgleich man die Dialkenylaromaten und die Monoalkenylaromaten auch getrennt in die Vorlage, welche die lithiumorganischen Verbindungen enthält, dosieren kann, werden diese zweckmäßigerweise in Mischung zusammen dosiert. Es kann zweckmäßig sein, sie vor der Dosierung mit inerten Lösungsmitteln zu verdünnen. Die Zugabe erfolgt z.B. mit Dosierpumpen oder anderen Dosierorganen. An Stelle einer kontinuierlichen Dosierung kann man die Mischung auch quasi kontinuierlich, d.h. in vielen Portionen in kurzen Zeitabständen, z.B. von einer Minute zugeben. Bevorzugt wird eine gleichmäßige Dosierrate über die gesamte Reaktionszeit, obgleich diese innerhalb gewisser Grenzen schwanken kann. Eine Dosierung über einen längeren Zeitraum ist jedoch erforderlich.

Wird die Mischung der Monomeren auf einmal in die Vorlage mit den Lithiumalkylen gegeben, so werden nur wenig oder keine mehrfunktionellen Initiatoren erhalten. Die optimale Dosierzeit richtet sich auch nach der Reaktionstemperatur. Es soll vorzugsweise so gearbeitet werden, daß die dosierten Monomeren schnell durch Polymerisation verbraucht werden. Hohe Temperatur erlaubt daher eine schnellere Dosierung. Die Reaktionsgeschwindigkeit liegt bekanntlich in Gegenwart von Äthern höher, so daß man dann bei entsprechend abgesenkten Temperaturen arbeiten kann. Die Temperatur ist begrenzt durch die Zersetzung der Lithiumalkyle. Sie wird daher in der Regel nicht höher als 100°C, optimal bei 80°C gewählt. Für die Konzentration der Lithiumalkylverbindungen wurde ein Bereich zwischen 500 mmol/l bis 1 mmol/l als geeignet gefunden, obgleich Abweichungen möglich sind. Eine Optimierung der Bedingungen ist im Einzelfall leicht experimentell möglich.

Als Lösungsmittel für die Reaktion kommen in erster Linie Kohlenwasserstoffe, wie Cyclohexan, Toluol, Hexan, Benzol und andere in Frage. Jedoch können diese zur Erhöhung der Reaktionsgeschwindigkeit auch geringe Mengen an polaren inerten Lösungsmitteln enthalten, wie Tetrahydrofuran, Diäthyläther oder Anisol, sofern bei der anschließenden Polymerisation die veränderte Mikrostruktur toleriert wird.

Als lithiumorganische Verbindungen sind in erster Linie Lithiumalkyle, wie n- oder sek.-Butyllithium, Methyllithium oder andere geeignet. Diese können in einer Vorreaktion mit Styrol oder Dienen zu höhermolekularen Lithiumverbindungen umgesetzt werden. Dadurch wird die Güte der bifunktionellen Initiatoren nicht beeinflußt, jedoch erhöht sich ihr Molekulargewicht entsprechend.

Das Verhältnis der mit dem Zulauf dosierten Dialkenylaromaten zu der Menge des in der Vorlage vorgelegten Lithiumalkyls bestimmt die Eigenschaften des entstehenden polyfunktionellen Initiators.

Die besten Ergebnisse werden mit einem Verhältnis von 1:2 ± 0,5 Moläquivalenten erhalten. Bei kleineren Verhältnissen erhöht sich die Funktionalität sehr stark, um unterhalb 1 : 1,2 bei der folgenden Polymerisation schon vernetzte Produkte zu ergeben. Bei höheren Verhältnissen als 1 : 3 sinkt der Anteil an bifunktionalen Initiatormolekülen unter ein praktsich interessantes Maß ab.

Bei der Herstellung der mehrfunktionellen Initiatoren kann man nach Beendigung der Zugabe der Dialkenylaromaten noch eine geringe Menge an Monoalkenylaromat nachdosieren, um die erfindundgemäße Reaktion zu vervollständigen.

Unter optimalen Herstellungsbedingungen, d.h. dem Verhältnis Dialkenylaromaten : Li-Verbindung = 1 : 2,1 entstehen vorzugsweise bifunktionelle Initiatoren neben monofunktionellen Initiatoren. Dies kann durch Gelpermeationschromatographie an Hand der relativen Wachstumsgeschwindigkeit der damit hergestellten Polymerisate nachgewiesen werden: Das Molekulargewicht der bifunktionellen lebenden Polymeren wächst, wie erwartet, doppelt so schnell wie das der Anteile an monofunktionellen lebenden Polymeren.

Vergleicht man erfindungsgemäß hergestellte mit nicht erfindungsgemäß hergestellten oligomeren Initiatoren bei der Herstellung von Polymeren, so ergeben sich charakteristische Unterschiede:
1. Mit erfindungsgemäß hergestellten Initiatoren ist die Viskosität der polymerisierenden Lösung schon bei niedrigen Molekulargewichten ungewöhnlich hoch. Das wird darauf zurückgeführt, daß die mit zwei ionischen Kettenenden wachsenden Polymeren infolge Assoziation ein reversibles Netzwerk bilden. Die Assoziation wird durch Umwandlung der carbanionischen Endgruppen mit Terminierungsreagentien in z.B. Li-Amid-, Li-Alkoholat- oder Li-Thiolat Endgruppen so verstärkt, daß bereits bei niedrigen Polymerkonzentrationen, z.B. 5 bis 7%, und Molgewichten von 15 bis 30 000 Gelbildung unter Entstehen einer aspikähnlichen Masse eintritt. Mit großer Rührerenergie und hohem Drehmoment kann die Masse zur Erreichung vollständigen Umsatzes durchmischt werden. Wenn dieses Gel mit Wasser oder anderen Hydroxylgruppen oder aktiven Wasserstoff enthaltenden Verbindungen versetzt wird, so verwandelt es sich infolge Aufhebung der ionischen Vernetzung in eine wasserdünne Lösung.
   Initiatoren, die nicht erfindungsgemäß hergestellt werden, zeigen dieses Verhalten nicht. Sie bilden unter gleichen Bedingungen in allen Phasen der Reaktion Lösungen mit sehr geringer Viskosität.
2. Erfindungsgemäß hergestellte Polymere auf der Basis von Dienen (und natürlich auch von Vinylaromaten), die z.B. mit Diaziridinen terminiert wurden und an jedem Kettenende Aminogruppen enthalten, können mit Diisocyanaten und anderen Reagentien vernetzt werden. Lösungen solcher Polybutadiene, versetzt mit Diisocyanaten, ausgegossen auf silikoniertes Papier und getrocknet, ergeben elastische, trockene, in Kohlenwasserstoffen unlösliche Filme, die sich von der Unterlage abziehen lassen und hohe reversible Dehnungen aufweisen.
   Entsprechende, mit nicht erfindungsgemäßen Initiatoren hergestellte Polymere ergeben unter gleichen Bedingungen lediglich stark klebende, nicht abziehbare, zum Teil oder völlig in Kohlenwasserstoffen lösliche Polymerbeläge.

Die Herstellung der oligomeren multifunktionellen Initiatoren muß ebenso wie die folgende Herstellung von Polymeren unter den dem Fachmann für anionische Polymerisationen bekannten inerten Bedingungen erfolgen, d.h. die Reaktionen werden unter hochgereinigtem, von Sauerstoff und Wasser befreiten Stickstoff oder Argon durchgeführt. Ebenso sind die Lösungsmittel und Monomere durch geeignete Maßnahmen, z.B. Destillation mit metallorganischen Verbindungen oder/und Trocknung mit Molekularsieb oder Aluminiumoxid zu reinigen. Ebenso müssen die Reaktionsgefäße einer intensiven Reinigung unterzogen werden, um alle Verunreinigungen zu entfernen, die mit lithiumorganischen Verbindungen reagieren können. Das Molekulargewicht der Initiatoren liegt zwischen 1000 g/mol und 30 000 g/mol und wird bestimmt durch Gelpermeationschromatographie mit einem Gerät der Fa. Waters, ausgerüstet mit UV- und Brechungsindexdetektoren, ermittelt. Das Molekulargewicht (MGW) wird an Eichkurven, die mit eng verteilten Standardpolymeren erstellt wurden, abgelesen.

Zur Erzielung optimaler Ergebnisse bei der Herstellung des Polymerisationsinitiators ist eine gute Durchmischung des Reaktorinhaltes mit dem Zulauf erforderlich, um trotz der schnell ablaufenden Reaktion an allen Stellen des Reaktors eine gleichmäßige Monomerkonzentration aufrecht zu erhalten.

Mit den erfindungsgemäßen Initiatoren kann man z.B. durch zweistufige Monomerzugabe ohne Kupplungsreaktion 3-Blockcopolymere herstellen. Das ist besonders dann von Interesse, wenn man in der 2. Stufe Monomere wie Methacrylsäureester oder Methacrylnitril polymerisiert. Auf diesem Wege sind z.B. anders nicht zugängliche 3-Blockcopolymere mit endständigen Polymethacrylsäureesterblöcken herstellbar.

Ferner kann man durch Funktionalisierung der lebenden Kettenenden Polymere herstellen, die an beiden Enden funktionale Gruppen enthalten. Die Umsetzungen als solche sind bekannt. Geeignete Funktionalisierungsreagentien sind z.B. Oxirane, die endständige primäre oder sekundäre Hydroxylfunktionen liefern (vgl. US-A 3 786 116), oder Thiirane, mit denen endständige Thiolgruppen eingeführt werden können. Nach der EP-A 0211395 oder der JP-Patentanmeldung 079/855/87 und anderen Literaturstellen kann man Polymere erhalten, die am Kettenende mindestens eine Aminogruppe enthalten. Die Umsetzungen werden in den genannten Schriften eingehend beschrieben, so daß sich hier eine Beschreibung erübrigt. Sie kann z.T. den folgenden Beispielen entnommen werden. Diese Polymere können ferner, wenn sie ganz oder zum Teil aus Dienen aufgebaut wurden, auch anschließend hydriert werden, wobei die aliphatischen Doppelbindungen ganz oder zum Teil verschwinden. Die Hydrierung wird normalerweise mit Hilfe von molekularem Wasserstoff und Katalysatoren auf Basis von Metallen oder Metallsalzen der 8. Nebengruppe des Periodensystems durchgeführt, entweder in homogener oder heterogener Phase. Die Verfahren sind bekannt und werden z.B. in der US-A 3 113 986, der DE-A 2 013 263, DE-B 1 106 961 oder DE-A 1 595 345 beschrieben.

Solche an beiden Kettenenden mit Mercapto-, Hydroxyl- oder Aminogruppen funktionalisierte Polymere sind von besonderem Interesse als Präpolymere für Polyurethane, Epoxidharze und andere Harze oder für deren Modifizierung. Die Herstellung von Epoxidharzen und von elastomeren Polyurethanen, bestehend aus einem "Hartsegment" aus aromatischen Polyisocyanaten und einem "Weichsegment" aus funktionalisierten flexiblen Makromolekülen ist bekannt und wird in H.-P. Elias, Makromoleküle, Seiten 778 - 780 und 809 - 812, 4. Aufl. (1981), Hüttig und Wepf Verlag Basel-Heidelberg-New York und der dort zitierten Literatur beschrieben.

Polybutadiendiole als "Weichsegmente" in thermoplastischen Polyurethanen zeichnen sich durch besonders gute Entmischung von "Hart- und Weichsegmenten" aus, was aus anwendungs- und verarbeitungstechnischen Gründen erwünscht ist, wie dies auch von Becker und Braun, Kunststoffhandbuch Band 7, Polyurethane, Seite 33 (1983), 2. Aufl. Hanser Verlag, München-Wien, beschrieben wird.

Die erfindungsgemäß erhaltenen Polymere weisen im allgemeinen Durchschnittsmolekulargewichte (Gewichtsmittel M_{w}) zwischen 2 000 und 200 000, vorzugsweise 3 000 bis 30 000 auf, ermittelt durch Gelpermeationschromatographie (GPC) und Vergleich mit standardisierten, zur Eichung geeigneten Polymeren (vgl. G. Glöckner, "Polymercharakterisierung durch Flüssigkeitschromatographie", Verlag A. Hüthig, Heidelberg, 1982. Gemessen wird üblicherweise in 0,25 gew.-%iger Tetrahydrofuranlösung bei 23°C und einer Durchflußgeschwindigkeit von 1,2 ml/min). Das Molekulargewicht wird zweckmäßig vor der Funktionalisierung ermittelt, da manche funktionalisierte Polymere von GPC-Säuren adsorbiert werden und diese unbrauchbar machen.

Die Aufarbeitung der Polymeren erfolgt nach bekannten Methoden, z.B. durch Fällen mit Nichtlösungsmitteln, durch Abdampfen des Lösungsmittels oder durch Wasserdampfdestillation. Auch Entgasung auf Entgasungsextrudern ist möglich.

In den folgenden Beispielen werden zwei hintereinander geschaltete Reaktoren benutzt, von denen der erste mit einem Volumen von 1000 mm³ für die Herstellung des Initiators dient. Er ist ausgerüstet mit Magnetrührer, Wasserbad, Reinstickstoffspülung, einem mit einer Gummikappe verschlossenen Stutzen und kann mit einer Dosierpumpe mit Zulauf versorgt werden. Der darin hergestellte Initiator kann über einen Teflonschlauch in den 2. Hauptreaktor überführt werden.

Als Hauptreaktor dient ein mit einem Rührer, einem mit Sole von -30°C betriebenem Sole-Rückflußkühler, einem kalibrierten, ebenfalls mit Sole-Rückflußkühler versehenem Tropftrichter, einem mit einer Gummikappe verschlossenen Stutzen sowie einer Reinstickstoffspülung versehener 10 l-Glaskolben mit Heiz- bzw. Kühlmantel. Der Stickstoff wird durch Waschen mit einem 2% Lithiumorganyl enthaltenden Weißöl von Spuren von Feuchtigkeit und Sauersfoff befreit. Der Reaktor wird zunächst mit der Lösung einer lithiumorganischen Verbindung in Cyclohexan, der etwas Styrol zugesetzt wurde, ausgekocht. Die als Indikator für die Aktivität der Lösung dienende orangene Farbe muß bis zum Schluß vorhanden sein. Die Lösung wird abgezogen, und der Kessel mit Cyclohexan befüllt, das zuvor über eine Säule mit Molekularsieb gereinigt wurde. Die noch vorhandenen Verunreinigungen werden nach Zugabe von 5 mm³ Styrol bei 40°C mit einer lithiumorganischen Verbindung durch die Gummikappe mit einer kalibrierten Spritze bis zum Auftreten eines geringen Orangetones austitriert.

Die erfindungsgemäßen Polymeren wurden durch die folgenden analytischen Methoden charakterisiert:
Das Molekulargewicht (MGW) wurde an einer Lösung der nichtmodifizierten Polymeren in THF durch Gelpermeationschromatographie mit einem Gerät der Fa. Waters, ausgerüstet mit UV- und Brechungsindexdetektoren, ermittelt. Es wird an Eichkurven, die mit engverteilten Standardpolymeren geeicht wurden, abgelesen.

Bei Blockcopolymeren wurde für das MGW empirisch das der Zusammensetzung entsprechende arithmetische Mittel zwischen den Eichkurven der beiden Homopolymeren zu Grunde gelegt. GPC ist an manchen modifizierten Polymeren wegen der polaren Endgruppe nicht möglich. Der Gesamtstickstoffgehalt wurde nach Kjeldahl, Basenstickstoff durch potentiometrische Titration der Lösung der Polymeren in Dichlorbenzol/Eisessig mit 0,1 n-Perchlorsäure bestimmt.

Die Viskositätszahl (VZ) wurde bei 25°C in Toluol (0,5 g Polymer in 100 cm³ Toluol) gemäß DIN 51562 bestimmt.

Die mechanischen Daten (Zugfestigkeit bei 300% Dehnung, Reißfestigkeit und Reißdehnung) wurden bestimmt an Prüfkörpern, die nach DIN 53455 aus zwischen Teflonscheiben gepreßten Platten oder Folien ausgestanzt werden.

### Beispiel 1

In dem Vorreaktor der zuvor beschriebenen Apparatur, der unter Reinstickstoff mit einer Lösung von sek. -Butyllithium in Cyclohexan zur Entfernung aller anionisch aktiven Verunreinigungen gespült wurde, wurden 300 cm³ Cyclohexan vorgelegt und mit einer Spritze 12,5 mmol sek.-Butyllithium zugegeben. Unter intensivem Rühren wurde bei 50°C über die Dosierpumpe innerhalb von 60 Minuten eine Mischung von 6,8 mmol Divinylbenzol, 62,5 mmol Styrol und 95 cm³ Cyclohexan mit gleichbleibender Geschwindigkeit zudosiert, dann 25 mmol Styrol in 50 cm³ Cyclohexan nachdosiert. Das Divinylbenzol war nach bekannten Vorschriften (vgl. USA-A 3 217 051 und US-A 3 317 052) mit Cu₂Cl₂ auf eine Konzentration von 93,5% gebracht und vor der Verwendung durch Destillation über Triäthylaluminium gereinigt worden. Es hatte laut GC die folgende Zusammensetzung: 75% p-Divinylbenzol, 18,5% m-Divinylbenzol, 5,9% Äthylvinylbenzol und 0,6% inerte Kohlenwasserstoffe.

60 Minuten nach Beendigung der Zugabe wurde der tiefrotbraune Inhalt des Vorreaktors in den Hauptreaktor gedrückt, der mit 3 l auf 70°C erhitztem Cyclohexan beschickt war. Innerhalb von 60 Minuten wurden dann 188 g Butadien zugegeben und bei dieser Temperatur auspolymerisiert.

Von der hochviskosen, klaren, hell-orange-farbenen Lösung wird eine Probe entnommen und mit Wasser ausgewaschen. Durch GPC wird ein Hauptpeak mit dem MGW von 40 000 festgestellt.

Die Hauptmenge der Lösung wird auf 40°C abgekühlt und mit 12,5 mmol 1,5-Diazabicyclo(3,1,0)hexan versetzt. Die Lösung verwandelt sich innerhalb einige Sekunden in eine Aspik-ähnliche granulierte, fast farblose Masse, die sich nur sehr langsam und mit hohem Drehmoment durchmischen läßt (0,5 UpM). Nach 20 Minuten werden 12,5 mmol Hydrazinhydrat zugegeben. Es entsteht sofort eine klare, leicht gelborange gefärbte, fast wasserdünne Lösung. Das Polymer wird durch Eingießen in Äthanol abgeschieden. Nach zweimaligem Auskneten mit Alkohol und Stabilisierung mit Inganox 1076 (Handelsname der Firma Ciba-Geigy, Basel) wird im Vakuum bei 50°C getrocknet. VZ: = 62,1, Stickstoffgehalt nach Kjeldahl: 0,18% Basenstickstoff : 0,17% Theorie für MGW 40000 (bifunktionell = 4 N je Molekül) : 0,14% N-Gehalt.

5 g des Polymeren wurden in 25 cm³ trockenem Cyclohexan gelöst und mit 0,33 mmol einer Lösung von Hexamethylendiisocyanat (HMDI) in Cyclohexan versetzt. Nach guter Durchmischung wurde auf silikoniertes Papier gegossen. Nach Trocknung bei Zimmertemperatur (ca. 3 Std.) konnte eine leicht klebrige, elastische Folie abgezogen werden, die nicht mehr in Kohlenwasserstoffen löslich war, sondern nur stark aufquoll.

### Vergleichsbeispiel A

Beispiel 1 wurde wiederholt mit dem Unterschied, daß bei Herstellung des Katalysators im Vorreaktor das Divinylbenzol ohne Styrol in das vorgelegte sek.-Butyllithium dosiert wurde. Es trat bei Beginn der Butadienzugabe eine intensive milchig-weiße Trübung auf, die nach Zugabe des Hydrazinhydrats wieder verschwand. Die Viskosität war während der Polymerisation und nach der Funktionalisierung niedrig.

Am entstehenden Polymeren wurden die folgenden Eigenschaften gemessen:
MGW (GPC): Es wurde ein engverteilter Peak mit dem MGW 24 000 festgestellt. Stickstoff lt. Kjeldahl: 0,14%. Theorie für das bifunktionelle Polymer (4 N je Molekül) : 0,23%.

Die Umsetzung mit HMDI, wie im Beispiel 1 beschrieben, ergab lediglich einen stark klebenden Belag, der sich mechanisch nicht von der Unterlage lösen ließ, und vollkommen in Cyclohexan löslich war.

### Vergleichsbeispiel B + C

Beispiel 1 wurde wiederholt mit dem Unterschied, daß das Divinylbenzol mit 2,5 bzw. 4 Mol Styrol in das vorgelegte sek.-Butyllithium dosiert wurde. An den entstehenden Polymeren wurden die folgenden Eigenschaften gemessen:
- Vergleichsbeispiel B:: MGW (GPC): 35 000
Stickstoffgehalt (Kjeldahl): 0,17%
Umsetzung mit HMDI: Nach 24 Std. stark klebender Film, der sich nicht von der Unterlage lösen ließ.
- Vergleichsbeispiel C:: MGW (GPC): 37 000
Stickstoffgehalt (Kjeldahl): 0,15%
Umsetzung mit HMDI: Nach 24 Std. mäßig klebender Film, der sich teilweise von der Unterlage lösen ließ.

### Vergleichsbeispiel D

Beispiel 1 wurde wiederholt, mit dem Unterschied, daß bei Herstellung des Katalysators im Vorreaktor die Mischung von Divinylbenzol und Styrol auf einmal in das vorgelegte sek.-Butyllithium gegeben wurde. Die Viskosität der Lösung nach der Polymerisation war niedrig.

Im GPC wurde ein enger Peak vom HGW 23000 festgestellt. Am Endprodukt wurde eine VZ von 44.7% und ein Stickstoffgehalt nach Kjeldahl von 0,17% (Theorie 0,24%) festgestellt.

Die Umsetzung mit HMDI gemäß Beispiel 1 ergab einen klebenden, nicht abziehbaren Film, der vollkommen in Cyclohexan löslich war.

### Beispiel 2

In einer Apparatur analog Beispiel 1 werden in einem Vorreaktor 300 cm³ Cyclohexan vorgelegt und 6,25 mmol sek.-Butyllithium mit einer Spritze zugefügt. Unter intensivem Rühren wird zu dieser Lösung eine Mischung aus 3,4 mmol Divinylbenzol und 272 mmol p-Methylstyrol in 100 cm³ Cyclohexan in 60 min bei 50°C kontinuierlich zugetropft. 60 min. nach Zulaufende wird die klare rot-orange Lösung in den eigentlichen Polymerisationskessel, der mit 2500 cm³ Cyclohexan befüllt ist, übergeführt. Danach werden 195 g Butadien bei 70°C zugetropft und 30 min. bei dieser Temperatur auspolymerisiert. Anschließend werden noch 63,5 g Styrol bei 60°C aufpolymerisiert.

Nach Abkühlung auf 40°C wird die viskose organgerote Polymerlösung mit 6,25 mmol 1,5-Diaza-bicyclo(3,1,0)hexan versetzt, worauf die Lösungsviskosität nochmals drastisch ansteigt. Die Aufarbeitung des Polymers erfolgt analog zu Beispiel 1.

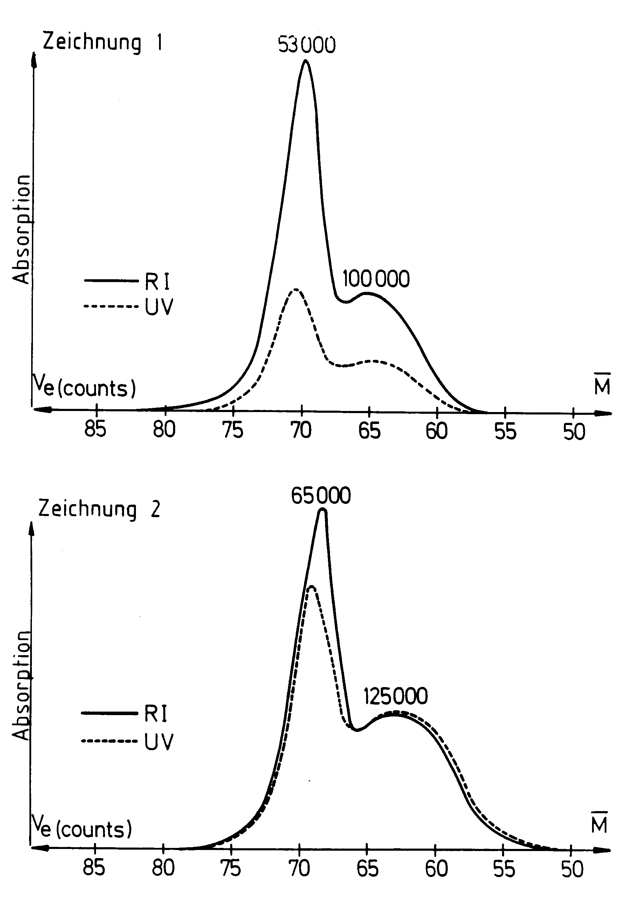

Im GPC wird nach der Umsetzung des multifunktionellen Lithium-Initiators mit Butadien eine bimodale Polymerverteilung vorgefunden (siehe hierzu Figur 1). Das Chromatogramm zeigt einen engverteilten niedermolekularen Polymeranteil mit einem mittleren Molekulargewicht von M̅ = 53 000 g/mol, der von monofunktionellen Spezies herrührt, und einen breit verteilten hochmolekularen Polymeranteil mit einem mittleren Molekulargewicht von M̅ = 100 000 g/mol, der auf bifunktionell wachsende Polymerketten zurückzuführen ist. V_{e(counts)} bedeutet in der Abbildung eine Meßeinheit für das Elutionsvolumen von Polymeren in der Gelpermeationschromatographie.

RI und UV sind die Absorptionskurven der Brechungsindex- und Ultraviolettdetektoren.

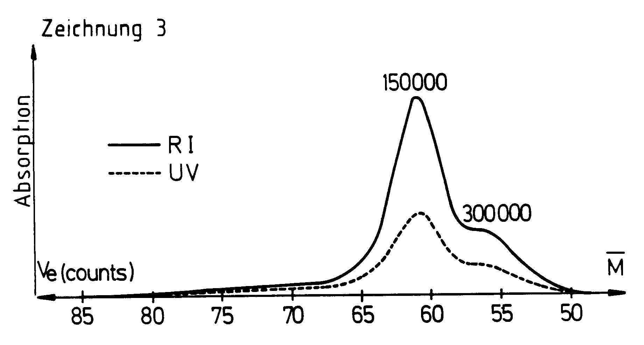

Nach der Zugabe von Styrol nimmt das mittlere Molekulargewicht der bifunktionell wachsenden Polymerketten im Vergleich mit den monofunktionell wachsenden Ketten erwartungsgemäß doppelt so schnell zu (siehe hierzu Figur 2).

Darüber hinaus zeigt ein Vergleich der UV-Absorption in Fig. 1 und Fig. 2, daß der hochmolekulare und bifunktionell wachsende Polymeranteil im Vergleich mit dem niedermolekularen und monofunktionell wachsenden Polymeranteil deutlich mehr Styrol in das lebende Polymer einbaut. Diese höhere Einbaurate wird für ein bifunktionell wachsendes Polymer auch erwartet.

Der Stickstoffgehalt nach Kjeldahl beträgt 0,17%. Die Umsetzung des aminoterminierten Polymers mit HMDI führt zur Vernetzung. Nach 12 h Trocknung wird ein trockener, abziehbarer Film erhalten.

### Beispiel 3

In diesem Versuch wurde der Initiator im Hauptreaktor, jedoch in Gegenwart von Tetrahydrofuran (THF) hergestellt. Im Hauptreaktor wurden 3000 cm³ Cyclohexan, 125 mmol THF, 12,5 mmol sek.-Butyllithium und 25 mmol Styrol vorgelegt. Bei 60°C wurde in 60 Minuten eine Mischung aus 100 cm³ Cyclohexan, 6,25 mmol Divinylbenzol (technische Qualität, Zusammensetzung: 46% m-Divinylbenzol, 20% p-Divinylbenzol, 25% bzw. 7% m-bzw. p-Äthylvinylbenzol, 1% Methylindene) und 62,5 mmol Styrol mit einer Dosierpumpe gleichmäßig zugegeben, dann in 30 Minuten aus 50 cm³ Cyclohexan und 25 mmol Styrol. Bei 70°C wurden dann zu der dunkel-organgefarbenen Lösung 280 cm³ (175 g) Butadien innerhalb von 60 Minuten zugegeben. 60 Minuten nach Ende des Zulaufes wurde auf 40°C abgekühlt und mit 12,5 mmol 1,5-Diaza-bicyclo(3,1,0)hexan funktionalisiert. Es wurde ein erheblicher Viskositätsanstieg beobachtet, jedoch war der Inhalt rührbar. Anschließend wurde wie bei Versuch 1 aufgearbeitet.

Es wurde eine enge MGW-Verteilung und ein MGW von 26 000 festgestellt. VZ: 51. Stickstoffgehalt nach Kjeldahl: 0,21 (Theorie 0,22).

Die Umsetzung mit HMDI gem. Beispiel 1 ergab eine trockene, elastische, gut von der Unterlage abziehbare Folie, die in Cyclohexan nur quellbar war.

### Beispiel 4

In der Apparatur gemäß Beispiel 1 wurden im Vorreaktor 300 cm³ Cyclohexan und 12,5 mmol sek.-Butyllithium vorgelegt. Bei 50°C wurde innerhalb von 60 Minuten eine Mischung aus 100 cm³ Cyclohexan, 6,25 mmol m-Diisopropenylbenzol und 125 mmol Styrol und dann in 30 Minuten 20 mmol Styrol in 50 ml Cyclohexan zudosiert. Es entstand eine klare, dunkelrotbraune Katalysatorlösung, die in den Hauptreaktor gedrückt wurde, der mit 2500 cm³ Cyclohexan beschickt worden war.

Bei 70°C wurden innerhalb von 70 Min. 600 cm³ Butadien (188 g) aufpolymerisiert. Die Farbe ging auf gelborange zurück. 30 Minuten nach Ende des Zulaufes wurde auf 40°C abgekühlt und mit 12,5 mmol 1,5-Diaza-bicyclo(3,1,0)hexan funktionalisiert, wobei eine steife, Aspik-ähnliche Masse entstand. Die Aufarbeitung zum Polymer erfolgte gemäß Beispiel 1.

Es wurde im GPC eine enge MGW-Verteilung und ein MGW von 30 000 gemessen. VZ: 56,8. Nach der Funktionalisierung wurde eine VZ von 57 und ein Stickstoffgehalt nach Kjeldahl von 0,21% (Theorie 0,19) gefunden. Die Umsetzung mit HMDI ergab nach 24 Std. eine von der Unterlage abziehbare, elastische, trockene Folie.

### Beispiel 5

Beispiel 3 wird wiederholt, jedoch an Stelle des Diisopropenylbenzols technisches Divinylbenzol (s. Beispiel 2) benützt und nach Beendigung der Butadienpolymerisation zur Herstellung eines 3-Blockcopolymeren mit 25% Styrolgehalt zusätzlich 70 cm³ Styrol aufpolymerisiert. Anschließend wurde wie zuvor funktionalisiert und aufgearbeitet.

Es wurden die folgenden Analysendaten gemessen:
GPC nach Beendigung der Butadienpolymerisation:
1 Hauptpeak vom MGW 40000, VZ = 58,3,
nach Beendigung der Styrolpolymerisation: MGW des Hauptpeaks 50000, VZ = 64,9.

Am Endprodukt wurde ein Stickstoffgehalt nach Kjeldahl von 0,17% (Theorie für MGW 50 000 0,112%) gemessen. Das Polymer zeigte an einer Pressfolie elastische Eigenschaften, wie sie für 3 Blockcopolymere typisch sind.

Die Umsetzung mit HMDI ergab bereits nach 3 Stunden eine zähe, völlig trockene, hochelastische Folie, die nach 24 Std. nur noch quellbar, aber unlöslich in Cyclohexan war.

### Beispiel 6

Analog zu Beispiel 1 werden in einem Vorreaktor 300 cm³ Cyclohexan und 3,6 mmol sek.-Butyllithium vorgelegt. Unter intensivem Rühren wird hierzu eine Mischung von 1,8 mmol 1,3-Bis(1-phenylvinyl)benzol und 250 mmol Styrol in 200 cm³ Cyclohexan innerhalb von 60 min bei 50°C kontinuierlich zugetropft.

60 min nach Zulaufende wird die rotbraune Initiatorlösung in einen 5 l Polymerisationskessel, der 2500 cm³ Cyclohexan und 13 g Butadien enthält, übergeführt.

In die auf 70°C erwärmte Lösung werden 117 g Butadien zugetropft und 60 min bei derselben Temperatur polymerisiert. Anschließend werden 47,2 g Styrol in 30 min bei 70°C aufpolymerisiert.

Man erhält eine sehr hochviskose Polymerlösung (Polymerkonzentration: 8 Gew.%), die nach Umsetzung mit 3,7 mmol 1,5-Diaza-bicyclo(3,1,0)hexan wegen zu großer Steifigkeit nur sehr langsam durchmischbar ist. Nach der Zugabe von 3,7 mmol Hydrazinhydrat wird wieder eine dünnflüssige Polymerlösung erhalten.

Das GPC des Blockcopolymeren (siehe Figur 3) zeigt eine bimodale Polymerverteilung, die auf das gleichzeitige und ungestörte Wachstum der mono- und bifunktionellen Polymerketten zurückzuführen ist.

Die niedermolekularen monofunktionell wachsenden Polymerketten haben ein mittleres Molekulargewicht von MGW = 150 000 g/mol, wohingegen für die breitverteilten bifunktionell wachsenden Polymerketten mit MGW = 300 000 g/mol erwartungsgemäß ein doppelt so großes mittleres Molekulargewicht gefunden wird.

## Patentansprüche

1. Verfahren zur Herstellung von oligomeren multifunktionellen Initiatoren für die anionische Polymerisation von Dienen und/oder Alkenylaromaten und/oder anderen anionisch polymerisierbaren Monomeren zu Homo-, Co- oder Blockcopolymeren mit Molgewichten zwischen 2 000 und 200 000 unter inerten Bedingungen, dadurch gekennzeichnet, daß man eine Mischung von Dialkenylaromaten und Alkenylaromaten im Molverhältnis 1:4 bis 1:100, gegebenenfalls gelöst in inerten Lösungsmitteln, in einem Zeitraum von 3 bis 300 Minuten bei Temperaturen zwischen 25 und 100°C kontinuierlich oder in kleinen Portionen - quasi kontinuierlich - unter guter Durchmischung in eine Vorlage laufen läßt, die, bezogen auf die Divinylaromaten, 1,2 bis 3,0 Moläquivalente einer oder mehrerer lithiumorganischer Verbindungen in Mischung mit einem inerten Lösungsmittel enthält und auspolymerisieren läßt.

2. Oligomere multifunktionelle Initiatoren wie sie nach da Verfahren gemäß Anspruch 1 erhalten werden.

3. Verwendung der nach dem Verfahren des Anspruchs 1 erhaltenen Initiatoren zur Herstellung von gegebenenfalls funktionalisierten Polymeren oder Blockpolymeren aus Alkenylaromaten und/oder Dienen.

4. Verwendung der gemäß Anspruch 3 erhaltenen Polymeren als Präpolymere für Polyurethane, Epoxidharze oder andere Harze.

## Claims

1. A process for the preparation of an oligomeric polyfunctional initiator for anionic polymerization of dienes and/or alkenylaromatics and/or other anionically polymerizable monomers to give homo-, co- and block copolymers having molecular weights of from 2,000 to 200,000 under inert conditions, wherein a mixture of dialkenylaromatics and alkenylaromatics in a molar ratio of from 1 : 4 to 1 : 100, if necessary dissolved in an inert solvent, is run in the course of from 3 to 300 minutes at from 25 to 100°C, continuously, or quasi-continuously in small portions, with thorough mixing, into an initially taken mixture which contains from 1.2 to 3.0 molar equivalents, based on the divinylaromatics, of one or more organolithium compounds mixed with an inert solvent, and is polymerized completely.

2. An oligomeric polyfunctional initiator as obtained by the process as claimed in claim 1.

3. Use of an initiator obtained by the process of claim 1 for the preparation of unfunctionalized or functionalized polymers or block copolymers of alkenylaromatics and/or dienes.

4. Use of a polymer obtained as claimed in claim 3 as a prepolymer for polyurethanes, epoxy resins or other resins.

## Revendications

1. Procédé de fabrication d'amorceurs oligomériques multifonctionnels pour la polymérisation anionique de diènes et/ou de composés alcénylaromatiques et/ou d'autres monomères anioniquement polymérisables en homopolymères, copolymères ou copolymères séquencés, avec des poids moléculaires compris entre 2.000 et 200.000, dans des conditions inertes, caractérisé en ce qu'on laisse couler un mélange de composés dialcénylaromatiques et de composés alcénylaromatiques, dans le rapport molaire de 1:4 à 1:100, éventuellement en solution dans des solvants inertes, à des températures comprises entre 25 et 100°C et en l'espace de 3 à 300 minutes, de manière continue, ou par petites fractions - quasi continuellement - sous un bon mélange intime, dans une masse préalable qui, par rapport aux composés divinylaromatiques, contient 1,2 à 3,0 équivalents molaires d'un ou plusieurs composés organiques du lithium, en mélange à un solvant organique et on laisse la polymérisation se poursuivre jusqu'à achèvement.

2. Amorceurs oligomériques multifonctionnels, tels qu'ils ont été obtenus par mise en oeuvre du procédé selon la revendication 1.

3. Utilisation des amorceurs obtenus par mise en oeuvre du procédé selon la revendication 1 en vue de la fabrication de polymères séquencés ou de polymères éventuellement fonctionnalisés à partir de composés alcénylaromatiques et/ou de diènes.

4. Utilisation des polymères obtenus suivant la revendication 3 à titre de prépolymères pour des polyuréthannes, des résines époxydes ou d'autres résines.
